# EUROPÄISCHE PATENTANMELDUNG

(11) **EP 3 248 502 A1**
(43) Veröffentlichungstag der Anmeldung: **29.11.2017**
(21) Anmeldenummer: 16001202.7
(22) Anmeldetag: 27.05.2016
(51) Int. Cl.: A47B 47/00, A63H 33/08, E04B 2/08, F16B 12/12

(54) **STABFÖRMIGES KONSTRUKTIONSELEMENT MIT ALLSEITIGEN, FORMSCHLÜSSIGEN VERBINDUNGSELEMENTEN**

(71) Anmelder: Behrens, Ernst-Wilhelm, 25799 Wrohm (DE)
(72) Erfinder: Behrens, Ernst-Wilhelm, 25799 Wrohm (DE)

(57) **Zusammenfassung**

Ein Konstruktionselement mit integrierten Verbindungselementen und Aufnahmen erlaubt mit sich selbst stabile Konstruktionen.

## Beschreibung

Die Erfindung bezieht sich auf ein stabförmiges Konstruktionselement mit mindestens 5 Seiten, wobei jede Seite entweder als Verbindungselement oder Aufnahme dafür dient.

Mithilfe des Konstruktionselementes ist es möglich, tragende oder stabilisierende Konstruktionen ohne Zuhilfenahme von Winkeln oder speziell für die Verbindung erforderliche Konstruktionselemente auszufertigen.

### HINTERGRUND DER ERFINDUNG-ZU LÖSENDES PROBLEM

Konstruktionselemente mit Formschlüssiger Verbindung aus Holz, Metall, Kunststoff oder Verbundstoffen, setzen entweder Verbindungselemente voraus, die geformte Gegenstücke aufweisen oder den Einsatz von stabilisierenden Verbindungselementen, wie beispielsweise Schrauben, Nägel, Dübel oder Klammern.

Dies bedingt einen höheren Aufwand in der Herstellung unterschiedlicher Bauteile und eine umfangreichere Lagerhaltung beim Einsatz von Fertigbauteilen.

### STAND DER TECHNIK

Im Bereich der formschlüssigen Verbindungen gibt es, exemplarisch für Holzkonstruktionen, eine Vielzahl von Verbindungen wie Verzinkungen, Gratungen, Zapfen, Nut/Feder, Klauenverbindungen etc. wie sie z.B. unter https://de.wikipedia.org/wiki/Holzverbindung dokumentiert sind. Alle diese Lösungen eignen sich entweder zur Verbindung mit einem geeignet andersartig geformten Gegenstück oder setzen fremde Verbindungselemente voraus. Andere Materialien werden miteinander Verschraubt, verhakt oder mit anderen lösbaren Bindungstechniken haltend verbunden.

Es gibt jedoch Systeme, bei denen die einzelnen Elemente formschlüssig zusammengefügt werden.

So bezieht sich DE 3047532 A1 auf ein Regal- und Schranksystem im Baukastenprinzip, bei diesem werden tragende Flächen und Wangen mit verbindenden, Stabförmigen Kantenelementen kombiniert. Die verbindenden Kantenelemente ermöglichen jedoch ohne Flächenelemente oder Wangen keine eigenständige stabile Konstruktion.

Ähnlich wird in US 8.641.155 B2 verfahren, hier erfordert die Verbindung der Flächen und Wangen mit den Stabförmigen Kantenelementen einen zusätzlichen Verbinder. Die Kantenelemente ermöglichen unter Nutzung der andersartig geformten Verbinder eine Verbindung miteinander, jedoch keine eigenständige, stabile Konstruktion.

US 9.051.955 B2 behandelt leicht aufbau- und zerlegbare Möbel die aus Flächigen Elementen und Stabförmigen Verbindungselementen bestehen. Auch hier ist die Verbindung von Flächen und Verbindungselementen Voraussetzung für eine stabile Konstruktion.

### AUFGABENSTELLUNG

Es ist Aufgabe vorliegender Erfindung mit einem einzigen Elementtyp Konstruktionen zu ermöglichen, die durch darin integrierte Verbinder stabil sind und nur in Ihrer Position gegen Verschieben fixiert werden.

Damit soll der Fertigungsaufwand verringert und bei Konstruktion und Aufbau eine Zeitersparnis erreicht werden.

### LÖSUNG

Diese Aufgabe wird durch stabförmiges Konstruktionselement mit allseitigen, formschlüssigen Verbindungselementen wie in Form von Schwalbenschwänzen oder T-Stücken sowie entsprechende Aufnahmen für diese erreicht.

Die Elemente sind mindestens fünfseitig, wobei eine, zwei oder drei der Längsseiten Aufnahmen in der Längsrichtung verlaufend oder quer zur Längsrichtung aufweisen und eine, zwei oder drei Längsseiten Verbindungselemente. An den beiden verbleibenden Seiten an den Enden befinden sind entweder eine oder zwei Verbindungselemente oder eine oder zwei Aufnahmen.

Somit können die Konstruktionselemente in drei Achsen formschlüssig miteinander kombiniert werden, sind damit in sich stabil und bedürfen lediglich der Fixierung in einer gewünschten Position durch Keile, Schrauben oder Nägel. In einer bevorzugten Ausführung wird ein konischer, an mind. einer Seite abgeflachter Stab verwendet, dessen Winkel zur eigenen Mittelachse passend dem Versatz einer Bohrung entspricht, die durch die Konstruktionselemente im Bereich der Aufnahme hindurchführt

Zur Erhöhung der Wirtschaftlichkeit in der nicht Auftragsbezogenen Fertigung folgen die Konstruktionselemente, die Anordnung der Aufnahmen und die Verbindungselemente einem festgelegtem Raster.

### BESCHREIBUNG ANHAND DER ZEICHNUNG

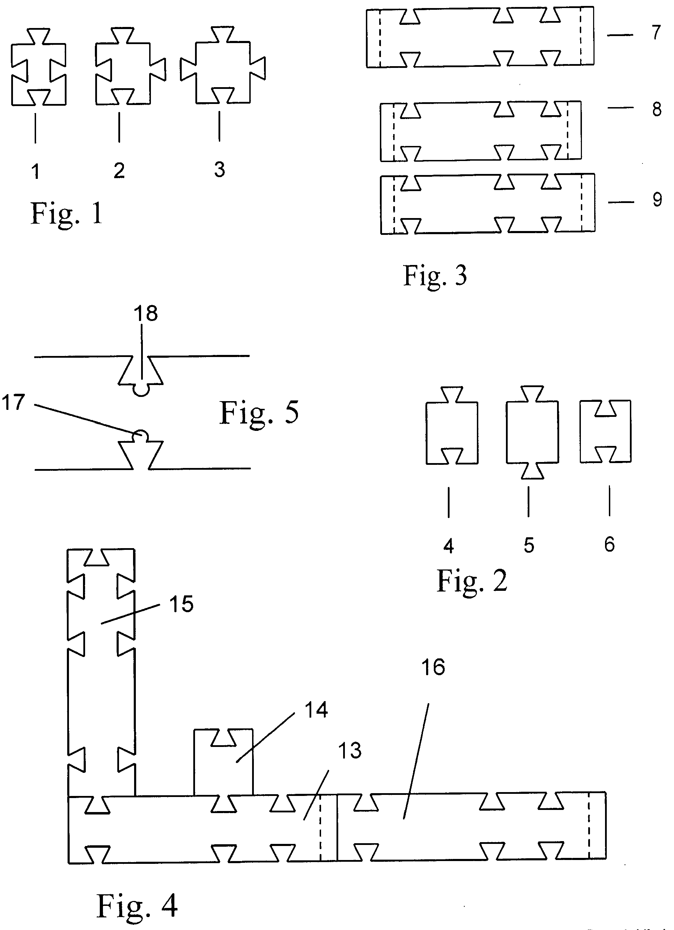

Fig. 1 zeigt in der Ansicht vom Kopf des Elementes ausgehend beispielhaft die Anordnung von bis zu drei Aufnahmen und Verbindungselementen. (1) zeigt drei Aufnahmen und ein Verbindungselement, (2) zeigt zwei Aufnahmen und zwei Verbindungselemente, (3) zeigt eine Aufnahme und drei Verbindungselemente.
Fig. 2 zeigt in der Ansicht vom Kopf vom Kopf des Elementes ausgehend die Anordnung von bis zu zwei Aufnahmen und Verbindungselementen. Dabei stellt (4) eine Aufnahme und ein Verbindungselement, (5) zwei Verbindungselemente und (6) zwei Aufnahmen dar.
Fig. 3 zeigt in der Ansicht von der Seite beispielhaft die Anordnung von Aufnahmen und Verbindungselemente an den Köpfen und je drei querlaufende Aufnahmen. Dabei stellt (7)zwei Verbindungselemente, (8) zwei Aufnahmen und (9) eine Aufnahme und ein Verbindungselement dar..
Fig. 4 zeigt beispielhaft die Verbindung von Konstruktionselementen miteinander, wobei (13) und (16) eine Längsverbindung entlang der Abszissenachse bilden, (14) eine Verbindung entlang der Ordinatenachse bildet und (15) die Applikatenachse zeigt.
Fig. 5 zeigt im Detail beispielhaft für die vorzugsweise Fixierung durch konische, abgeflachte Stäbe die Bohrungen (17) in den quer laufenden Aufnahmen (18),

## Patentansprüche

1. Stabförmiges Konstruktionselement mit allseitigen, formschlüssigen Verbindungselementen, **dadurch gekennzeichnet, dass** diese über integrierte Verbindungselemente und Aufnahmen dafür verfügen, wobei die Aufnahmen sowohl längs als auch quer zur Länge angeordnet sind, alle Elemente einem einheitlichem Abstandsraster folgen, die Konstruktionselemente ohne Gegenstücke stabil miteinander zu verbinden sind und Konstruktionen in allen Ebenen ermöglichen.

2. Stabförmiges Konstruktionselement mit allseitigen, formschlüssigen Verbindungselementen nach Anspruch 1, **dadurch gekennzeichnet, dass** die Verbindungselemente und Aufnahmen die Schwalbenschwanzförmig aufweisen.

3. Stabförmiges Konstruktionselement mit allseitigen, formschlüssigen Verbindungselementen nach Anspruch 1, **dadurch gekennzeichnet, dass** die Verbindungselemente und Aufnahmen die Form von T-Stücken oder ähnlichen Formschlüssigen Verbindungen aufweisen.

4. Stabförmiges Konstruktionselement mit allseitigen, formschlüssigen Verbindungselementen nach Anspruch 1 - 3, **dadurch gekennzeichnet, dass** die Positionen der querliegenden Aufnahmen, der Verbindungselemente und die Länge der Konstruktionselemente einem festgelegtem Raster folgen..

5. Stabförmiges Konstruktionselement mit allseitigen, formschlüssigen Verbindungselementen nach Anspruch 1, **dadurch gekennzeichnet, dass** die Aufnahmen mit einer Bohrung versehen sind und durch diese ein konisches Fixierungselement geführt wird das die Verbindungselemente in die Aufnahmen verspannt.

## Geänderte Patentansprüche

### Geänderte Patentansprüche gemäss Regel 137(2) EPÜ.

1. Stabförmiges Konstruktionselement mit allseitigen, formschlüssigen Verbindungsementen, **dadurch gekennzeichnet, dass** diese über integrierte Verbindungselemente und Aufnahmen dafür verfügen, wobei die Aufnahmen sowohl entlang der Längsachse des stabförmigen Elements, als auch quer dazu angeordnet sind, alle Elemente einem einheitlichem Abstandsraster folgen, die Konstruktionselemente mit Hilfe von Bohrungen und darin durch Eindrücken verspannten konischen Elementen stabil miteinander zu verbinden sind und Konstruktionen in allen drei othogonal zueinander stehenden Ebenen ermöglichen.

2. Stabförmiges Konstruktionselement mit allseitigen, formschlüssigen Verbindungselementen nach Anspruch 1, **dadurch gekennzeichnet, dass** die Verbindungselemente und Aufnahmen einen schwalbenschwanzförmigen Querschnitt aufweisen.

3. Stabförmiges Konstruktionselement mit allseitigen, formschlüssigen Verbindungselementen nach Anspruch 1, **dadurch gekennzeichnet, dass** die Verbindungselemente und Aufnahmen die Form von T-Stücken oder ähnlichen Formschlüssigen Verbindungen aufweisen.

4. Stabförmiges Konstruktionselement mit allseitigen, formschlüssigen Verbindungselementen nach Anspruch 1 - 3, **dadurch gekennzeichnet, dass** die Positionen der querliegenden Aufnahmen, der Verbindungselemente und die Länge der Konstruktionselemente einem festgelegtem Raster folgen.
